# DEMANDE DE BREVET EUROPEEN

(11) **EP 0 921 200 A1**
(43) Date de publication de la demande: **09.06.1999**
(21) Numéro de dépôt: 97870196.9
(22) Date de dépôt: 03.12.1997
(51) Int. Cl.: C21B 13/14

(54) **Procédé de réduction d'oxydes de fer et de fusion du fer et installation à cet effet**

(71) Demandeur: SIDMAR N.V., B-9042 Gent (BE)
(72) Inventeur: Monteyne, Guido, B-9971 Lembeke (BE)
(74) Mandataire: Van Malderen, Michel

(57) **Abrégé**

Procédé de réduction d'oxydes de fer, caractérisé en ce qu'il comporte au moins trois étapes consécutives, à savoir :
- une première étape classique de préréduction jusqu'à un degré de métallisation de l'ordre de 80 à 95%, et de préférence de 85 à 90%;
- une deuxième étape de réduction de l'oxyde de fer préréduit jusqu'à quasiment 100% et un chauffage à une température supérieure à 1000 °C et au maximum jusqu'à une température proche du point de fusion dans un réacteur compact, avec un noyau permettant le passage des gaz ou avec une lance d'injection, avec alimentation de charbon et de fondants préchauffé, en recourant à un chauffage soit par brûleurs, soit par induction lors du passage des matières dans le réacteur, soit par de l'oxygène à travers le manteau, afin d'atteindre une température proche de la fusion; et
- une troisième étape d'alimentation du mélange de fer quasiment totalement métallisé, de gangue, de fondants et d'excès de charbon dans un four contenant une phase fondue de fonte recevant l'énergie nécessaire pour la fusion, de préférence par induction ou éventuellement à l'aide d'un arc électrique, le métal et le laitier étant ensuite prélevés, de préférence en continu, par exemple par débordement.

## Description

### Objet de l'invention

La présente invention concerne un procédé nouveau de réduction d'oxydes de fer avec production d'une phase liquide de fonte en trois étapes, permettant de produire du métal à l'état fondu au départ de minerais ou de produits recyclés et de charbon et/ou de gaz. L'invention vise à obtenir un certain nombre d'avantages économiques qui seront décrits ci-après par rapport aux techniques connues.

La présente invention concerne également une installation permettant la mise en oeuvre de ce procédé.

### Arrière-plan technologique à la base de l'invention

L'accroissement de la production électrique d'acier a augmenté la nécessité de disposer de voies alternatives permettant d'éviter l'utilisation de ferrailles, les ferrailles de qualité adéquate devenant de plus en plus rares.

Diverses techniques de réduction dite directe ont été développées récemment dans ce but. La plupart d'entre elles présentent comme inconvénient majeur le fait que l'on obtient un produit à l'état préréduit, qualifié généralement d'éponges de fer, de très faible densité et à surface spécifique élevée favorisant une ré-oxydation du fer. Ceci provoque des difficultés de stockage et de transport, et dans la plupart des cas, rend nécessaire un compactage onéreux pour permettre la mise en oeuvre ultérieure. A titre d'exemple, les éponges de fer présentent généralement une densité apparente de 1,5 à 2 kg/dm³ et sont compactées jusqu'à une valeur de 5 à 5,5 kg/dm³.

De plus, la chaleur latente importante qui est présente dans le matériau préréduit avant refroidissement est perdue.

Certaines des techniques de réduction proposées sont basées sur l'emploi de sources carbonées solides, comme du charbon, qui sont ajoutées en excès pour assurer une réduction suffisante. Cet excès de sources carbonées est ajouté à d'autres produits résiduaires contenant des cendres, dont il faut se débarrasser.

Tous ces inconvénients peuvent être évités par un processus de réduction / fusion par étapes selon l'invention. La fonte brute produite en phase fondue peut être utilisée dans toutes les applications habituelles telles que la coulée en petits lingots ou les opérations d'affinage en aciérie, par exemple en aciérie électrique ou dans des convertisseurs à oxygène.

### Buts de l'invention

La présente invention vise tout particulièrement à transformer des oxydes de fer préréduits directement après leur production et de manière continue pour obtenir de la fonte à l'état liquide dans des conditions économiquement plus avantageuses et avec des équipements technologiques plus compacts et améliorés par rapport aux équipements existants.

### Eléments caractéristiques de l'invention

Le procédé de l'invention comporte au moins trois étapes consécutives, dont la deuxième constitue l'élément caractéristique intrinsèquement nouveau de l'invention.

Selon l'invention :
- la première étape est une étape classique de préréduction jusqu'à un degré de métallisation de l'ordre de 80 à 95%, et de préférence de 80 à 90% avec ajout de fondants pour la mise en nuance du laitier à produire dans la troisième étape;
- la deuxième étape est une étape de réduction de l'oxyde de fer préréduit jusqu'à quasiment 100% dans un réacteur compact avec un noyau permettant le passage de gaz ou avec une lance d'injection, avec alimentation de charbon préchauffé par le haut, en recourant éventuellement à un chauffage soit par des brûleurs, soit par induction, soit par de l'oxygène, afin d'atteindre une température entre 1000 °C et une température proche de celle de la fusion; et
- la troisième étape consiste a alimenter le mélange de fer quasiment totalement métallisé, de gangue, de fondants et d'excès de charbon dans un four contenant une phase fondue de fonte recevant l'énergie nécessaire pour la fusion, de préférence par induction ou éventuellement à l'aide d'un arc électrique, le métal et le laitier étant ensuite évacués, de préférence en continu, par exemple par débordement.

Selon une forme d'exécution préférée de l'invention, en plus du charbon préchauffé alimenté par le haut, il est également intéressant d'injecter dans la deuxième étape de l'hydrogène, par exemple sous forme d'un gaz riche en hydrogène, tel que du gaz de coke ou du gaz naturel conditionné, et/ou du charbon pulvérisé dans la partie inférieure de la cuve.

Le charbon préchauffé qui est mis en oeuvre peut provenir éventuellement d'un excès de carbone présent dans les matières résultant de la première étape. De toute manière, quelle que soit sa provenance, il sera mis en oeuvre à une température aussi élevée que possible, et l'utilisation de l'excès de carbone provenant de l'étape antérieure à la température de sa production dans cette étape contribue fortement aux caractéristiques avantageuses de l'invention.

Les oxydes de fer préréduits de la première étape peuvent résulter de n'importe quel procédé de préréduction, qui peut se réaliser entre autres dans un four à sole tournante, dans un four à cuve, dans un four rotatif ou dans un four à lit fluidisé. La mise en oeuvre de l'invention est d'autant plus intéressante du point de vue économique que le produit préréduit se trouve à température plus élevée, c'est-à-dire comporte plus de chaleur latente.

D'autre détails relatifs au procédé conforme à l'invention seront décrits plus en détails ci-après.

On observera cependant que la technique de l'invention se différentie essentiellement des solutions de l'état de la technique par le fait que tout d'abord, on réalise une réduction quasi complète des oxydes de fer mis en oeuvre et que les matières résultantes alimentent directement un bain constitué par une phase de fonte liquide.

On veille à ce que la fonte liquide produite présente une teneur précisément dosée en carbone supérieure à 3%, de préférence de l'ordre de 4,5 à 5,5%, ce qui généralement, pour la plupart des minerais de fer mis en oeuvre, permet d'obtenir une fonte fondue présentant des caractéristiques de fluidité favorables.

La deuxième étape de l'invention est réalisable selon au moins deux processus opérationnels.

Dans une première version avec l'utilisation d'un noyau avec évents communiquant avec un conduit central, on a recours à une injection réduite d'hydrogène. L'installation utilisée pour pratiquer la deuxième étape de l'invention est constituée essentiellement par une cuve verticale, cylindrique ou légèrement conique, éventuellement sur une partie seulement de sa hauteur, avec noyau central cylindrique ou légèrement conique, en fait une cuve sans fond, alimentée à sa partie supérieure par la matière préréduite chaude provenant de la première étape. Cette matière se trouve de préférence à une température supérieure à 800 °C (typiquement à 1000 °C) et présente un degré de métallisation supérieur à 80% (typiquement à 85%), en mélange avec une quantité contrôlée de charbon préchauffé et de fondants, pouvant provenir ou non de l'étape précédente. Le long des ouvertures prévues dans le manteau de la cuve, on peut alimenter à différentes hauteurs sur la périphérie des gaz capables de réagir avec les oxydes de fer résiduaires, par exemple de l'hydrogène sous forme d'un gaz riche en hydrogène et/ou des charbons pulvérisés.

Le produit se déplace vers le bas, dans l'espace libre délimité par la virole et le noyau, dans la partie active du réacteur sur une longueur qui peut être typiquement de 2 à 3 mètres, et qui peut bien entendu varier en fonction des capacités de l'installation. Cet équipement est conçu de manière qu'une partie des gaz libérés puissent être facilement évacués par le conduit central du noyau, ce qui constitue un élément caractéristique particulièrement important et nécessaire pour éviter le risque d'un blocage des gaz dans un environnement à très haute température par des matériaux qui pourraient présenter une perméabilité gazeuse trop réduite.

Le gaz produit est alimenté vers la première étape pour apporter sa contribution par sa chaleur latente et sa capacité réductive.

Un apport thermique d'appoint peut être réalisé, soit par des brûleurs, disposés à la partie supérieure de la virole, qui brûlent une fraction du charbon présent et les gaz qui s'échappent de la colonne, soit par chauffage inductif, des boucles d'induction étant disposées extérieurement à la virole de la cuve à une hauteur appropriée ou par une faible injection d'oxygène à travers les parois de la cuve.

La partie inférieure de la virole de la cuve plonge dans un bain contenant une phase métallique de fonte fondue et, flottant sur celle-ci, de laitier. La profondeur à laquelle la partie inférieure de la virole du réacteur plonge dans le four de fusion où se produit la troisième étape du procédé, est réglable, de façon à pénétrer dans le bain métallique ou à se trouver au niveau de celui-ci, tout en se trouvant bien entendu dans ce cas dans la couche surnageante de laitier. Ce réglage de la profondeur de pénétration dans le four de fusion peut également être mis à profit pour compenser l'usure progressive du bord inférieur de la virole du réacteur.

La cuve est pourvue en son centre d'un noyau créant un espace libre avec l'enveloppe interne de la virole de l'ordre de 10 à 30 cm, et dont la fonction est d'une part de répartir la matière subissant la métallisation finale dans la deuxième étape sur la périphérie de la cuve et d'autre part d'évacuer une partie des gaz libérés.

Le noyau, indépendamment du mouvement vertical possible de la virole, peut également être réglé en hauteur et peut éventuellement également subir une légère rotation.

Ces mouvements peuvent être mis à profit pour empêcher un risque éventuel de blocage de la charge et ainsi faciliter l'évacuation des gaz. Le mouvement vertical du noyau est également mis à profit lors du démarrage de l'installation, ainsi qu'il sera décrit plus loin.

Afin de faciliter l'évacuation des gaz, le noyau comporte de préférence un conduit central d'évacuation des gaz relié à la périphérie du noyau par des fentes ou évents mettant en communication le conduit central du noyau avec le volume compris entre la périphérie externe du noyau et l'enveloppe interne de la virole. Différentes formes d'exécution sont possibles pour le noyau, celui-ci pouvant être plus ou moins conique, ceci en fonction des matières chargées et des températures de ces masses.

Ledit espace libre entre le noyau et la virole est rempli par une charge descendant verticalement et qui est amenée jusqu'à une température proche du point de fusion, de préférence de l'ordre de 1100 à 1150 °C. Sous le noyau de trouve une zone tampon constituée par de la matière prétraitée et pratiquement totalement métallisée, d'un poids suffisant, par suite de sa hauteur, pour pénétrer avec force dans la surface du liquide sous-jacent, ce qui accélère considérablement sa fusion.

Dans une seconde version du noyau avec utilisation d'un noyau central sans évents, avec conduit intérieur pour l'injection d'une plus grande quantité d'hydrogène et/ou de charbon pulvérisé dans le fond de la cuve, l'installation utilisée pour pratiquer la deuxième étape de l'invention est constituée essentiellement par une cuve verticale et conique, avec par exemple le diamètre de la partie supérieure deux fois plus grand que le diamètre de la partie inférieure et d'un noyau central, en fait une cuve sans fond, alimentée de la même façon et dans les mêmes conditions que pour la première version. Cette injection est appliquée aussi par plusieurs ouvertures à travers la moitié inférieure du manteau du réacteur. La partie active de la cuve a cette fois une hauteur par exemple de l'ordre de maximum deux mètres (typiquement de 1,5 mètre). L'évacuation des gaz se fera dans ce cas uniquement par l'espace entre le manteau de la virole et le noyau. L'échauffement des matières se fait comme dans la première version.

Dans les deux versions, la fusion est réalisée dans la troisième étape par un phénomène de brassage important résultant du chauffage de la fonte fondue par induction ou par arc électrique dans le four de fusion.

Ce four de fusion sous-jacent est pourvu d'un équipement de déchargement permanent de la fonte liquide, de préférence pour la simplicité sous forme d'un siphon dans lequel la fonte et le laitier sont séparés de manière en soi connue. Le laitier est de préférence granulé ou peut coaguler dans des bassins prévus à cet effet. Les deux formes de laitier sont des sous-produits connus commercialisables. La fonte brute à l'état liquide constitue un produit particulièrement utile, par exemple dans les process d'affinage tels que les fours électriques (EAF) ou les convertisseurs à oxygène (BOF).

Lors de la mise en route de l'installation, c'est-à-dire lors du chargement dans la cuve où se réalise la deuxième étape du traitement des matières, il est possible de régler la position du noyau en hauteur de manière à pouvoir réguler l'alimentation dans le four à induction contenant la phase de fonte fondue jusqu'à réaliser un tampon adéquat.

Les axes verticaux de la cuve et du four de fusion, habituellement identiques, peuvent être cycliquement légèrement décalés pour d'une part faciliter l'évacuation du laitier et d'autre part faciliter un dégazage éventuel du bain liquide.

Pour éviter que l'oxyde de fer réduit mais non encore fondu ne soit évacué avec le laitier par l'équipement de déchargement, une source de chaleur peut être apportée au-dessus du laitier à l'endroit du déchargement en vue de favoriser la fusion du laitier et du fer (par exemple une torche à plasma).

Bien que le procédé ait été décrit pour la réduction d'oxydes de fer, il s'applique cependant également pour la réduction d'autres oxydes métalliques ou mélanges de ceux-ci avec des oxydes de fer, en particulier les métaux utilisés conjointement avec le fer pour la production d'alliages tels que l'acier inox. Il s'applique également pour la récupération des poussières des hauts fourneaux, des convertisseurs et des fours électriques.

Le procédé de l'invention en trois étapes permet également de traiter des sous-produits recyclables provenant d'installations sidérurgiques.

La fonte produite peut être utilisée directement à l'état fondu mais également sous forme de lingots.

L'absence quasi totale d'oxydes de fer en fin de la deuxième étape garantit une durée de vie prolongée pour le revêtement réfractaire de l'embouchure de déchargement du réacteur et pour le four à induction.

Le procédé de l'invention se caractérise par une productivité très élevée :
- dans le processus de production d'acier par suite de la mise en oeuvre de produits de départ à l'état liquide au lieu de matières solides produites notamment dans le procédé DRI;
- dans le procédé DRI lui-même s'il est utilisé dans la première étape, par la possibilité de réaliser une préréduction partielle, compte tenu du fait que l'étape finale de la préréduction est celle qui exige le plus de temps (entre 85 et 95%).

La caractéristique essentielle est le fait que la matière alimentée dans le four de fusion est constituée par de l'oxyde de fer réduit pratiquement à 100%, c'est-à-dire jusqu'à métallisation quasi complète, obtenu à une température proche du point de fusion. Un tel produit transitoire et son alimentation à travers un petit réacteur dans un bain de fonte fondue n'ont été réalisés par aucune technique antérieure à la présente invention.

Le choix du procédé DRI pour réaliser la première étape dans les conditions les plus économiques en fonction des circonstances locales peut toujours être couplée avec la deuxième étape du procédé. Ceci s'applique également à la possibilité de coupler la deuxième étape avec la troisième étape.

Le procédé présente également un certain nombre d'avantages du point de vue purement énergétique.

Le couplage continu des trois étapes évite toute perte d'énergie. D'autre part, les gaz utiles libérés peuvent être réutilisés. L'excès de combustible (charbon) provenant de le première étape peut être utilisé avantageusement dans la deuxième et la troisième étapes. Le charbon utilisé dans la deuxième étape est utilisé à l'état chaud, et est chauffé avec de l'énergie bon marché dans la première étape.

La deuxième et la troisième étapes peuvent se réaliser dans une installation de forme particulièrement compacte, ce qui réduit également les investissements. La puissance électrique installée travaille à charge continue sans pointes de consommation. L'unité de fusion de la troisième étape se présente avec un encombrement très réduit.

De plus, la deuxième et la troisième étapes sont réalisées dans de petites unités faciles à échanger en vue de l'entretien ou de la réfection avec des investissements minimaux.

Finalement, la technique permet une utilisation optimale des matières de recyclage.

Du point de vue qualitatif, il convient de noter que la fonte constitue une matière première bien plus stable (plus de ré-oxydation) et avantageuse que les ferrailles, qui occasionnent des problèmes qualitatifs énormes par suite des impuretés présentes. La fonte contient une source énergétique complémentaire sous forme du carbone présent. La désulfuration se fait comme pour la fonte d'un haut fourneau.

### Brève description des dessins

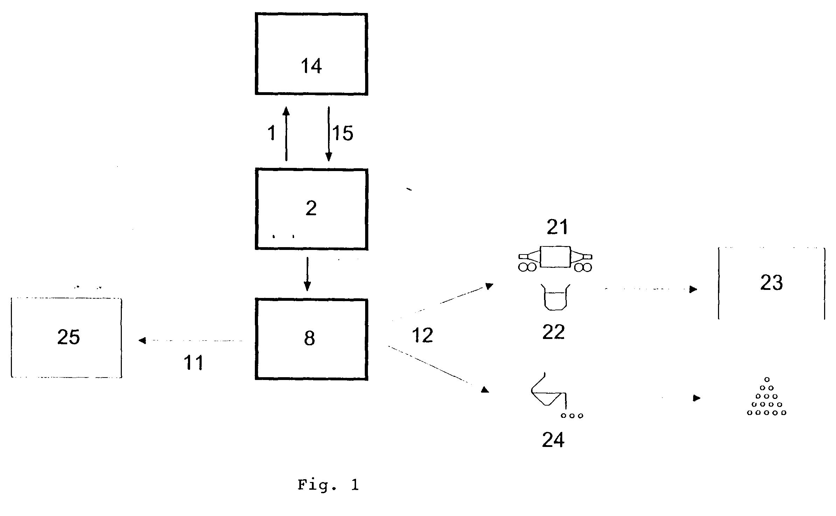

- La figure 1: représente le schéma d'une installation pour la mise en oeuvre du procédé.
- La figure 2: représente une installation avec réacteur de réduction et four à induction selon la première version.
- La figure 3: représente variante de l'installation représentée à la figure 2 avec chauffage du réacteur de réduction par induction.
- La figure 4: représente une variante de l'installation représentée à la figure 2 avec chauffage de la sortie du four à induction par torche à plasma.
- La figure 5: représente une installation avec lance centrale pour l'injection et pour le contrôle de la charge, selon la seconde version.
- La figure 6: représente une variante de l'installation représente à la figure 5 avec torche à plasma.

Des repères de référence identiques sont utilisés pour des éléments identiques ou similaires. Dans les différentes variantes d'exécution (qui ne comportent pas nécessairement tous les équipements dont la liste suit), représentés dans les figures, on a utilisé les repères suivants :
1. alimentation en oxydes de fer préréduits
2. réacteur de réduction (éventuellement mobile)
3. noyau (éventuellement mobile)
4. brûleur d'appoint
5. bobine d'induction
6. injection de gaz riche en hydrogène ou de poudre de charbon
7. injection de gaz riche en oxygène
8. four à induction
9. bobines d'induction
10. siphon
11. laitier
12. fonte liquide
13. torche à plasma
"a" et "b" représentent les mouvements possibles de déplacement

### Description d'une forme d'exécution préférée de l'invention

L'installation formée par le réacteur de réduction et le four de fusion dans laquelle se déroulent la deuxième et la troisième étapes du procédé est alimentée par des oxydes de fer préréduits provenant d'une unité de préréduction 14 par un conduit 1 et peut recevoir une alimentation complémentaire en charbon, en chaux et autres agents.

Cette installation comporte essentiellement un réacteur de réduction 2 plongeant dans un bain de fonte liquide contenu dans un four à induction 8. Les bobines d'induction 9 assurent à la fois un maintien à température et un effet de brassage de la fonte liquide.

Dans le réacteur 2 est disposé un noyau mobile 3 et ce réacteur est éventuellement pourvu de bobines d'induction 5.

Un ou plusieurs injecteurs 6 permettent l'injection d'un gaz riche en hydrogène et/ou charbons pulvérisés dans la masse d'oxydes de fer préréduits à un niveau adéquat dans le réacteur de réduction 2.

Un équipement 10 agissant comme siphon permet de prélever d'une part de la fonte liquide 12 et d'autre part du laitier 11. Une torche à plasma 13 permet, si nécessaire, d'apporter un chauffage complémentaire.

La fonte liquide peut être utilisée pour tout usage classique. On a schématisé le transport par Wagon-torpedo 21 ou poche 22 vers l'aciérie 23 et la coulée 24 en lingotières.

Le laitier peut subir une granulation en 25 et être utilisé pour les usages habituels du laitier de haut fourneau notamment.

Les gaz provenant du réacteur de réduction 2 sont de préférence recyclés comme gaz de réduction 15 vers l'unité de préréduction 14, où ils servent à la fois au chauffage et à l'opération de préréduction à proprement parler.

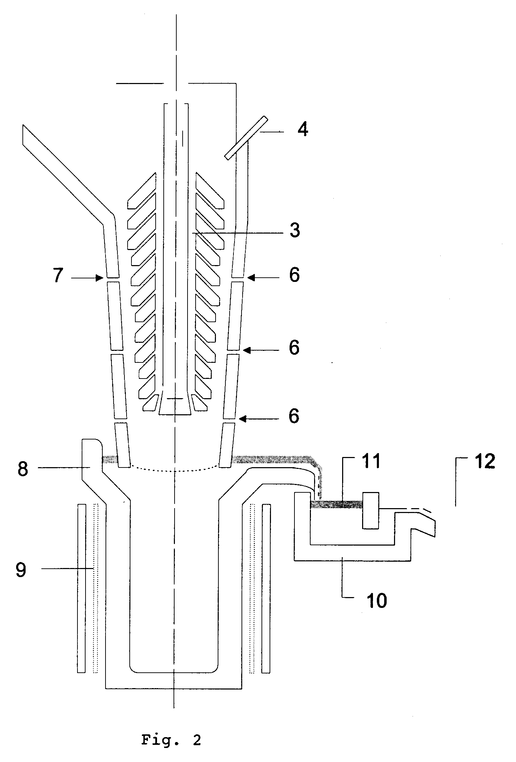

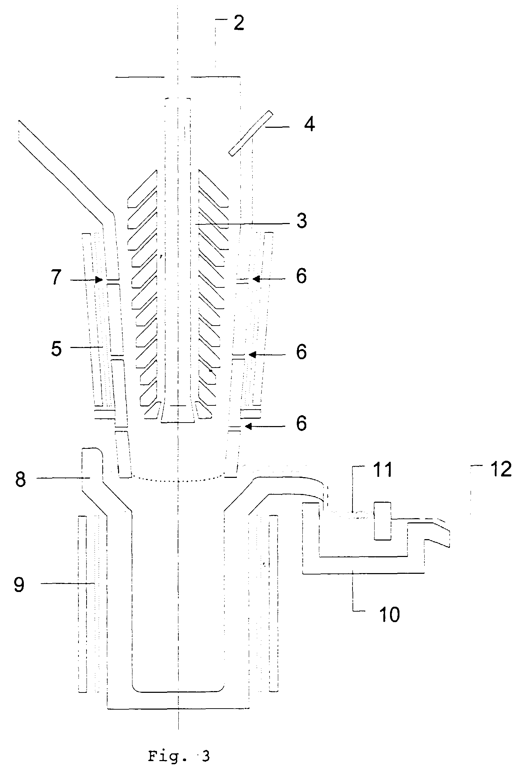

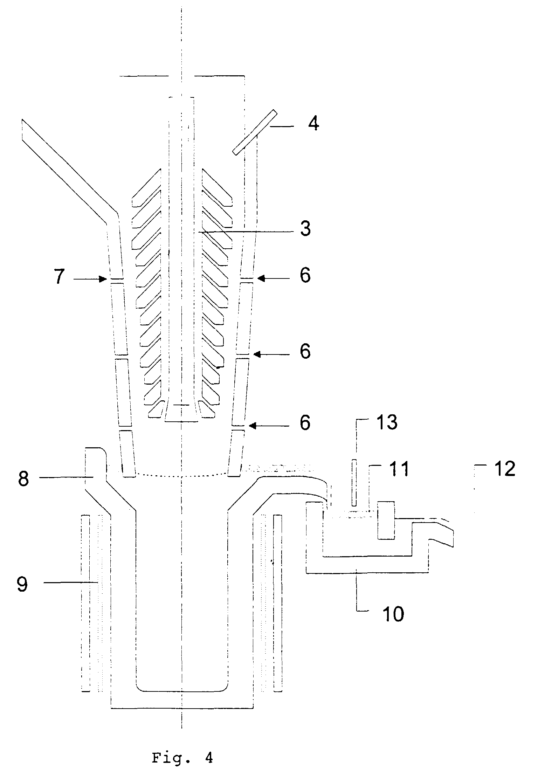

Le noyau 3 est, pour une première version (voir figures 2, 3 et 4), pourvu de fentes ou d'évents communiquant avec un conduit central permettant d'évacuer et de recycler ces gaz, et de préférence légèrement conique.

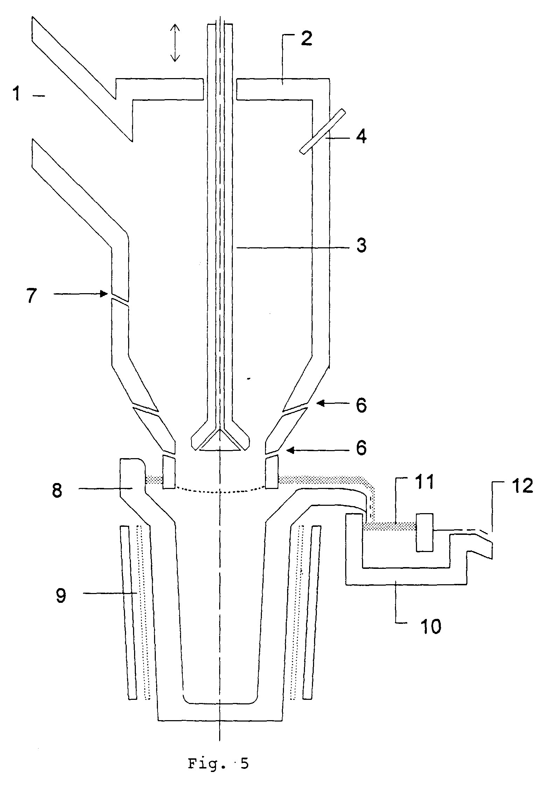

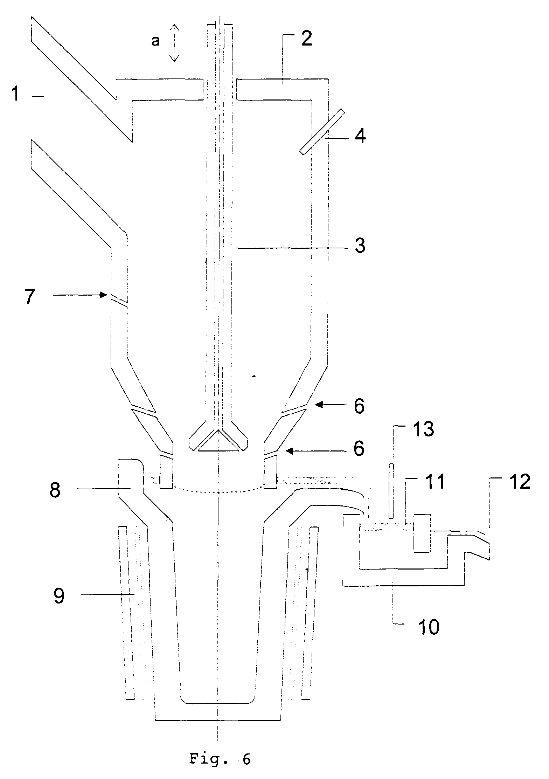

Pour la deuxième version (figures 5 et 6), le noyau est cylindrique à l'exception de la partie inférieure équipée d'une canalisation d'injection.

Dans les deux cas, le but est de permettre l'évacuation des gaz après réaction avec l'hydrogène et/ou les charbons pulvérisés sans que la masse de matière, préréduite et en cours de réduction complète à une température supérieure à 1000°C, ne provoque d'obstruction.

## Revendications

1. Procédé de réduction d'oxydes de fer, caractérisé en ce qu'il comporte au moins trois étapes consécutives, à savoir :
- une première étape classique de préréduction jusqu'à un degré de métallisation de l'ordre de 80 à 95%, et de préférence de 85 à 90%;
- une deuxième étape de réduction de l'oxyde de fer préréduit jusqu'à quasiment 100% et un chauffage à une température supérieure à 1000 °C et au maximum jusqu'à une température proche du point de fusion dans un réacteur compact, avec un noyau permettant le passage des gaz ou avec une lance d'injection, avec alimentation de charbon et de fondants préchauffé, en recourant à un chauffage soit par brûleurs, soit par induction lors du passage des matières dans le réacteur, soit par de l'oxygène à travers le manteau, afin d'atteindre une température proche de la fusion; et
- une troisième étape d'alimentation du mélange de fer quasiment totalement métallisé, de gangue, de fondants et d'excès de charbon dans un four contenant une phase fondue de fonte recevant l'énergie nécessaire pour la fusion, de préférence par induction ou éventuellement à l'aide d'un arc électrique, le métal et le laitier étant ensuite prélevés, de préférence en continu, par exemple par débordement.

2. Procédé selon la revendication 1, caractérisé en ce que l'on injecte dans la deuxième étape un gaz riche en hydrogène tel que du gaz de coke ou du gaz naturel conditionné et/ou des charbons pulvérisés par plusieurs petites ouvertures dans le manteau du réacteur et par une lance centrale.

3. Procédé selon la revendication 1 ou 2, caractérisé en ce que le charbon préchauffé qui est mis en oeuvre provient au moins partiellement d'un excès de charbon présent dans les matières résultant de la première étape.

4. Procédé selon l'une quelconque des revendications précédentes, caractérisé en ce qu'une métallisation pratiquement complète est réalisée dans un réacteur de réduction alimentée par le dessus en oxydes de fer préréduits à l'état chaud, de préférence à une température d'au moins 1000 °C et présentant un taux de métallisation supérieur à 80%, et de préférence supérieur à 85%.

5. Installation utilisée pour pratiquer la deuxième étape de l'invention, caractérisée en ce qu'elle est constituée essentiellement par un réacteur de réduction, en fait une cuve sans fond, verticale et ronde, alimentée à sa partie supérieure par la matière préréduite chaude provenant de la première étape, dont l'extrémité inférieure plonge dans un bain de fonte fondue contenu dans un four, de préférence un four à induction.

6. Installation selon la revendication 5, caractérisée en ce que le réacteur ou le four de réduction est pourvu de moyens appropriés afin de permettre un réglage en hauteur de la partie du réacteur de réduction immergée dans le bain de fonte.

7. Installation selon la revendication 5 ou 6, caractérisée en ce que le réacteur de réduction est pourvue en son centre d'un noyau servant à régler le flux des matières subissant la métallisation finale dans la deuxième étape sur la périphérie de la cuve et simultanément pour l'évacuation des gaz libérés ou pour l'injection de H₂ et/ou des charbons pulvérises.

8. Installation selon la revendication 7, caractérisée en ce que le noyau, indépendamment du mouvement vertical de la virole de la cuve de réduction, est réglable en hauteur et peut éventuellement également subir une légère rotation.

9. Installation selon la revendication 7 ou 8, caractérisée en ce que le noyau comporte un conduit central d'évacuation des gaz relié à la périphérie du noyau par des fentes ou des évents mettant en communication le conduit central du noyau avec le volume compris entre la périphérie externe du noyau et l'enveloppe interne de la virole.

10. Installation selon l'une quelconque des revendications 5 à 9, caractérisée en ce que dans le bain de fonte, se produit une fusion complète de l'éponge de fer pratiquement totalement préréduite lors de son passage progressif de la partie supérieure du réacteur de réduction vers le bain de fonte fondue.

11. Installation selon l'une quelconque des revendications 5 à 10, caractérisée en ce que le four est un four à induction, les courants d'induction provoquant un brassage du bain fondu, sans turbulences exagérées.

12. Installation selon l'une quelconque des revendications 5 à 11, caractérisée en ce que le four est pourvu d'un équipement de déchargement de la fonte liquide sous forme d'un siphon dans lequel la fonte et le laitier sont séparés de manière en soi connue.

13. Utilisation de la fonte produite par le procédé d'une quelconque des revendications 1 à 4 et/ou l'installation d'une quelconque des revendications 5 à 12 en aciérie.
